# EUROPÄISCHE PATENTANMELDUNG

(11) **EP 4 109 697 A1**
(43) Veröffentlichungstag der Anmeldung: **28.12.2022**
(21) Anmeldenummer: 21181179.9
(22) Anmeldetag: 23.06.2021
(51) Int. Cl.: H02J 1/06

(54) **ELEKTRISCHES ENERGIEVERSORGUNGSSYSTEM FÜR MOBILE PLATTFORMEN UND FAHRZEUG MIT EINEM ELEKTRISCHEN ENERGIEVERSORGUNGSSYSTEM**

(71) Anmelder: Airbus SAS, 31707 Blagnac (FR)
(72) Erfinder: STEINWANDEL, Jürgen, 82024 Taufkirchen (DE); STEINER, Gerhard, 82024 Taufkirchen (DE); HOFMANN, Michael, 82024 Taufkirchen (DE); VOGEL, Florian, 82024 Taufkirchen (DE); WEHLE, Christian, 82024 Taufkirchen (DE)
(74) Vertreter: LKGLOBAL Lorenz & Kopf PartG mbB Patentanwälte

(57) **Zusammenfassung**

Die Erfindung betrifft ein elektrisches Energieversorgungssystem (10) für mobile Plattformen (100). Das elektrische Energieversorgungssystem (10) umfasst eine elektrische Anordnung (12) mit mindestens zwei Brennstoffzelleneinheiten (14), welche in einer seriellen Verschaltung (16) zueinander in der elektrischen Anordnung (12) vorgesehen sind und dazu ausgeführt sind, eine elektrische Spannung zur Versorgung mindestens eines Verbrauchers (18) bereitzustellen. Das elektrische Energieversorgungssystem (10) umfasst ferner eine Masseeinheit (20), welcher ein elektrisches Bezugspotential zugeordnet ist und mindestens zwei Steuerungseinheiten (22), die jeweils mindestens einer der Brennstoffzelleneinheiten (14) zugeordnet sind, wobei jede der mindestens zwei Steuerungseinheiten (22) dazu ausgeführt ist, eine elektrische Spannung der zugeordneten Brennstoffzelleneinheit (14) bezogen auf das Bezugspotential zu erfassen. Die Erfindung betrifft ferner ein Luftfahrzeug (100) mit einem elektrischen Energieversorgungssystem (10).

## Beschreibung

### Gebiet der Erfindung

Die vorliegende Erfindung betrifft elektrische Energieversorgungssysteme, die auf Brennstoffzellen basieren. Insbesondere betrifft die Erfindung ein elektrisches Energieversorgungssystem für mobile Plattformen sowie ein Luftfahrzeug mit einem solchen elektrischen Energieversorgungssystem.

### Hintergrund der Erfindung

Brennstoffzellensysteme gewinnen heutzutage immer mehr an Bedeutung, insbesondere im Hinblick auf Antriebssysteme für mobile Plattformen. Solche Brennstoffzellensysteme, beispielsweise PEM (Polymerelektrolyt-Membran) -Brennstoffzellen, weisen als einzelne Module eine Spannungslage bis ca. 400V auf. Dies ist u.a. fertigungsbedingt und hängt von der Anzahl an Einzelzellen ab, die typischerweise in einem Brennstoffzellenmodul integriert werden können. Dabei definiert die Anzahl der Einzelzellen die Spannung des Moduls. PEM-Brennstoffzellen, welche in Form von sog. Einzel-Stacks vorliegen können, stellen typischerweise elektrische Leistungen von ca. 30 bis 50 kW bereit. Diese können für höhere Leistungen über eine parallele Verschaltung zusammengefasst werden. Die Spannungslage ist dabei die des Einzel-Stacks. Sofern höhere Spannungslagen erforderlich sind, wird bei Automotive-Anwendungen ein DC/DC-Wandler eingesetzt, welcher dann die höhere Arbeitsspannung bereitstellt. Höhere Arbeitsspannungen sind erforderlich, um die Strombelastung insgesamt bei einer gegebenen Aufnahmeleistung sowie das Volumen und Gewicht der elektrischen Antriebsmotoren zu möglichst gering zu halten.

### Zusammenfassung der Erfindung

Es ist eine Aufgabe der vorliegenden Erfindung, ein verbessertes auf Brennstoffzellen basierendes elektrisches Energieversorgungssystem bereitzustellen.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem Aspekt der Erfindung ist ein elektrisches Energieversorgungssystem für mobile Plattformen, beispielsweise Fahrzeuge, angegeben. Das elektrische Energieversorgungssystem umfasst eine elektrische Anordnung mit mindestens zwei Brennstoffzelleneinheiten, welche in einer seriellen Verschaltung zueinander in der elektrischen Anordnung vorgesehen sind und dazu ausgeführt sind, eine elektrische Spannung zur Versorgung mindestens eines Verbrauchers bereitzustellen. Das elektrische Energieversorgungssystem umfasst ferner eine Masseeinheit, welcher ein elektrisches Bezugspotential zugeordnet ist, sowie mindestens zwei Steuerungseinheiten, die jeweils mindestens einer der Brennstoffzelleneinheiten zugeordnet sind, wobei jede der mindestens zwei Steuerungseinheiten dazu ausgeführt ist, eine elektrische Spannung der zugeordneten Brennstoffzelleneinheit bezogen auf das Bezugspotential zu erfassen.

Das erfindungsgemäße Energieversorgungssystem kann auf mobilen Plattformen bzw. in mobilen Anwendungen eingesetzt werden. Solche mobilen Plattformen sind zum Beispiel Fahrzeuge, wie Bodenfahrzeuge, Luftfahrzeuge, Wasserfahrzeuge etc.

Das erfindungsgemäße elektrische Energieversorgungssystem stellt eine Möglichkeit dar, eine serielle Verschaltung einzelner Brennstoffzelleneinheiten bzw. sog. Brennstoffzellen-Stacks zur Spannungserhöhung vorzusehen, unter besonderer Berücksichtigung der Anforderungen beim Einsatz im Luftfahrtbereich. Da insbesondere im Luftfahrtbereich im Vergleich zum Automotive-Bereich sehr hohe Antriebsleistungen erforderlich sind, kommt einer Erhöhung der Systemspannung ein hoher Stellenwert zu. Die resultierenden Ströme und die Leitungsgewichte des Systems können durch das hierin beschriebene elektrische Energieversorgungssystem vergleichsweise klein gehalten werden.

Weiterhin stellen Beispiele der vorliegenden Erfindung eine Möglichkeit bereit, Spannungen bezüglich eines Referenzpotentials möglichst gering zu halten, um der großen Einsatzhöhe von Fluggeräten und damit der luftdruckabhängigen Durchbruchspannung Rechnung zu tragen. Ebenso kann durch das elektrische Energieversorgungssystem ein Notfallbetrieb im Falle eines Fehlers sichergestellt werden sowie ein einfacher kombinierter Betrieb zusammen mit weiteren Energiespeichern bereitgestellt werden. Das elektrische Energieversorgungssystem ermöglicht es, den Einsatz zusätzlicher Elektroniken zur Spannungsanhebung, das heißt einen DC/DC-Wandler (Gleichstrom/Gleichstrom-Wandler), zu vermieden.

Wie erwähnt, weist das elektrische Energieversorgungssystem eine elektrische Anordnung mit mindestens zwei Brennstoffzelleneinheiten auf. Die Brennstoffzelleneinheiten, welche hier auch als sog. Brennstoffzellen-Stacks bzw. Brennstoffzellenstapel bezeichnet werden, können jeweils eine oder mehrere Brennstoffzellen, beispielsweise PEM (Polymerelektrolyt-Membran) -Brennstoffzellen, umfassen. Die mindestens zwei Brennstoffzelleneinheiten sind dabei seriell in der elektrischen Anordnung, das heißt in serieller Verschaltung, innerhalb des elektrischen Energieversorgungssystems angeordnet. Mit anderen Worten sind die mindestens zwei Brennstoffzelleneinheiten in Reihe geschaltet. Hierbei kann eine beliebige Anzahl von Brennstoffzelleneinheiten in Reihe geschaltet werden.

Die Brennstoffzelleneinheiten liefern eine elektrische Spannung zur Versorgung mindestens eines Verbrauchers. Der Verbraucher kann eine Antriebseinheit, insbesondere ein oder mehrere Antriebsmotoren bzw. Elektromotoren, der mobilen Plattform sein. Der Antriebsmotor kann seine Wechselspannungsleistung zum Beispiel über einen Inverter beziehen, der die Gleichspannung der Brennstoffzelleneinheiten in eine einstellbare und je nach Konfiguration auch variable Wechselspannung mit wählbarer und je nach Ausführung auch variabler Ausgangsfrequenz transformiert. Die einstellbare Spannung sowie die variable Frequenz können hierbei zur Geschwindigkeitssteuerung des/der elektrischen Antriebsmotoren dienen. Es ist möglich, den Inverter auch im Generatorbetrieb zu betreiben, um im Elektromotor anfallende Bremsenergie zu rekuperieren und anschließend einer in der elektrischen Anordnung vorgesehenen Fahrbatterie zuzuführen.

Eine Masseeinheit ist für das elektrische Energieversorgungssystem vorgesehen, wobei der Masseeinheit ein elektrisches Bezugspotential zugeordnet ist. Die Masseeinheit kann zum Beispiel ein elektrisch leitentendes Primärstrukturelement der mobilen Plattform sein, welchem ein Null-Potential zugeordnet ist, das als Bezugspotential für die elektrische Anordnung dient.

Wie erwähnt, weist das elektrische Energieversorgungssystem mindestens zwei Steuerungseinheiten auf, die jeweils mindestens einer der Brennstoffzelleneinheiten zugeordnet sind. Eine erste Steuerungseinheit der mindestens zwei Steuerungseinheiten kann zum Beispiel einer ersten Brennstoffzelleneinheit der mindestens zwei Brennstoffzelleneinheiten zugeordnet sein bzw. mit dieser elektrisch und/oder kommunikativ gekoppelt sein, während eine zweite Steuerungseinheit der mindestens zwei Steuerungseinheiten einer zweiten Brennstoffzelleneinheit der mindestens zwei Brennstoffzelleneinheiten zugeordnet sein kann bzw. mit dieser elektrisch und/oder kommunikativ gekoppelt sein kann. Es ist möglich, dass eine oder mehrere der mindestens zwei Steuerungseinheit jeweils mehreren Brennstoffzelleneinheiten zugeordnet sind bzw. mit diesen elektrisch und/oder kommunikativ gekoppelt sind.

Jede der mindestens zwei Steuerungseinheiten ist dazu ausgeführt, eine elektrische Spannung der zugeordneten Brennstoffzelleneinheit bezogen auf das Bezugspotential, beispielsweise ein Null-Potential, zu erfassen. Ferner ist es möglich, dass jede der mindestens zwei Steuerungseinheiten dazu ausgeführt ist, eine elektrische Spannung der ihr zugeordneten Brennstoffzelleneinheit bezogen auf das Bezugspotential zu regeln. Eine solche Regelung kann dabei derart erfolgen, dass die gesamte durch die Brennstoffzelleneinheiten erbrachte Leistung möglichst gleichmäßig auf die mindestens zwei Brennstoffzelleneinheiten verteilt ist. Beispielsweise kann die Regelung derart erfolgen, dass die Brennstoffzelleneinheiten im Wesentlichen gleich viel elektrische Leistung in die elektrische Anordnung abgeben und dem Verbraucher bereitstellen.

Eine Kommunikation und Steuerung kann mit Bezug auf die Referenzmasse bzw. das Bezugspotential erfolgen. Insbesondere ist es vorteilhaft, die Steuerung und Regelung der Brennstoffzelleneinheiten und ggf. vorhandener Zusatzeinheiten wie Turbine, Fan, Pumpe, etc. auf dieses Bezugspotential zu beziehen, um eine sonst erforderliche Potentialtrennung zu vermeiden.

Gemäß einer Ausführungsform umfasst das elektrische Energieversorgungssystem neben den Brennstoffzelleneinheiten keine Leistungselektronik, insbesondere keinen DC/DC-Wandler, zur Erhöhung einer durch die Brennstoffzelleneinheiten bereitgestellten elektrischen Spannung.

Das kann bedeuten, dass sich bei der oben beschriebenen seriellen Verschaltung der mindestens zwei Brennstoffzelleneinheiten zur Spannungserhöhung die Notwendigkeit einer zusätzlichen Leistungselektronik, wie z.B. DC/DC-Wandler, auf die Ankopplung zusätzlicher Energiespeicher, wie Akkumulatoren, Kondensatoren oder sog. Supercaps (Superkondensatoren), reduziert. Insbesondere um das Systemgewicht bei einem gegebenem Leistungsbedarf gering zu halten sowie eine möglichst hohe Zuverlässigkeit zu erreichen, ist es vorteilhaft, auf eine Leistungselektronik zur Erhöhung der Systemspannung, wie es beispielsweise bei einer parallelen Verschaltung von Brennstoffzellen der Fall ist, zu verzichten und einen möglichst direkten Leistungsfluss bereitzustellen.

Gemäß einer Ausführungsform sind die mindestens zwei Steuerungseinheiten jeweils dazu ausgeführt, die elektrische Spannung der zugeordneten Brennstoffzelleneinheiten bezogen auf das Bezugspotential zu regulieren. Diese Regulierung kann derart erfolgen, dass die jeweils durch die Brennstoffzelleneinheiten bereitgestellten elektrischen Leistungen im Wesentlichen gleich groß sind.

Eine Steuerungseinheit kann somit beispielsweise eine elektrische Spannung oder einen Spannungsanstieg an der ihr zugeordneten Brennstoffzelleneinheit regeln bzw. steuern, um somit die von dieser zugeordneten Brennstoffzelleneinheit an den Verbraucher bereitgestellten elektrischen Spannung individuell und unabhängig von einer bereitgestellten elektrischen Spannung einer weiteren Brennstoffzelleneinheit zu regeln. In einem bevorzugten Fall regeln die Steuerungseinheiten die elektrischen Spannungen der ihnen zugeordneten Brennstoffzelleneinheiten, so dass die erbrachte Leistung möglichst gleichmäßig auf die Brennstoffzelleneinheiten verteilt ist.

Gemäß einer Ausführungsform sind die Brennstoffzelleneinheiten in Bezug auf die Masseeinheit in einer symmetrischen Verschaltung vorgesehen, so dass eine erste Spannungsdifferenz zwischen einer ersten Brennstoffzelleneinheit der mindestens zwei Brennstoffzelleneinheiten und dem Bezugspotential gleich oder im Wesentlichen gleich einer zweiten Spannungsdifferenz zwischen einer zweiten Brennstoffzelleneinheit der mindestens zwei Brennstoffzelleneinheiten und dem Bezugspotential ist.

Das Bezugspotential für die Brennstoffzelleneinheiten ist die Masseeinheit bzw. Masse. Die Brennstoffzelleneinheiten werden hierbei symmetrisch zur Masseeinheit verschalten. Diese Art der Verschaltung minimiert die gegenüber der Masseeinheit auftretenden Spannungen und gewährleistet gleichzeitig eine hohe Systemspannung.

Mit anderen Worten ist das Bezugspotential an einer Stelle zwischen den mindestens zwei Brennstoffzelleneinheiten in der elektrischen Anordnung angekoppelt. Der Begriff "symmetrisch" ist dabei im Sinne von "elektrisch symmetrisch" zu verstehen. Dieser Zusammenhang wird in der Figurenbeschreibung noch genauer erläutert. Eine solche elektrisch symmetrische Verschaltung ist vorteilhaft, da hierbei die maximal auftretende Spannung mit Bezug auf das Bezugspotential (Masse) gegenüber den alternativen Verschaltungsarten minimiert ist.

Wenn die elektrische Anordnung zum Beispiel vier Brennstoffzelleneinheiten hat, so können jeweils zwei Brennstoffzelleneinheiten auf beiden Seiten des Bezugspotentials angeordnet sein, so dass jeweils zwei Brennstoffzelleneinheiten in einer elektrisch symmetrischen Verschaltung relativ zum Bezugspotential vorgesehen sind. Die Erfassung der Spannungsdifferenz über die beiden dem Bezugspotential vorgeschalteten Brennstoffzelleneinheiten sowie der Spannungsdifferenz über die beiden dem Bezugspotential nachgeschalteten Brennstoffzelleneinheiten kann dabei durch die mindestens zwei Steuerungseinheiten erfolgen, die bei einer Abweichung der erfassten Spannungsdifferenzen eine Regulierung der bereitgestellten Spannungen der einzelnen Brennstoffzelleneinheiten initiieren kann.

Gemäß einer Ausführungsform liegt in der symmetrischen Verschaltung das Bezugspotential auf einer positiven Spannungsseite der ersten Brennstoffzelleneinheit und auf einer negativen Spannungsseite der zweiten Brennstoffzelleneinheit.

Die symmetrische Verschaltung stellt somit eine bipolare Anordnung gegenüber dem Bezugspotential bereit und unterscheidet sich von Konfigurationen, bei denen der Bezug der Kommunikation und Steuerung auf der negativen Spannungsseite sämtlicher Brennstoffzelleneinheiten liegt. In der oben beschriebenen symmetrischen Verschaltung ist dies nach wie vor der Fall für die positive Spannung, nicht jedoch für die negative Spannung. Dort ist das Bezugspotential der Kommunikation und Steuerung nach wie vor auf die Masseeinheit bezogen, der Anschluss des Leistungsteils der Brennstoffzelle ist jedoch auf der positiven Seite der entsprechenden Brennstoffzelleneinheit. Auch dies wird in der Figurenbeschreibung noch genauer ersichtlich.

Gemäß einer Ausführungsform ist eine elektrische Spannung auf einer negativen Spannungsseite der elektrischen Anordnung mit dem Bezugspotential identisch.

Dies ist eine alternative Konfiguration zur oben dargestellten symmetrischen Verschaltung. Insbesondere ist hier das Bezugspotential für die aktiven Teile und Gehäuse auf die Masseeinheit bezogen. Bei dieser Verschaltungsart im TN/TT-Netz ist die negative Rückleitung mit Stromfluss vom Verbraucher zu den Brennstoffzelleneinheiten mit der Masseeinheit identisch.

Gemäß einer Ausführungsform sind sämtliche aktive Teile der elektrischen Anordnung vom Bezugspotential entkoppelt.

Dies ist eine weitere alternative Konfiguration zur oben dargestellten symmetrischen Verschaltung. Auch hier sind die Brennstoffzelleneinheiten seriell verschaltet, die Bezugspotentiale jedoch in Form eines IT-Netzes vorgesehen. Hier sind lediglich noch die Gehäuse auf Masseeinheit bezogen, die aktiven Teile der elektrischen Anordnung sind vom Gehäuse getrennt, das heißt elektrisch entkoppelt.

Gemäß einer Ausführungsform weist das elektrische Energieversorgungssystem ferner einen elektrischen Energiespeicher oder Akkumulator auf, welcher in einer parallelen Verschaltung bezüglich der mindestens zwei Brennstoffzelleneinheiten vorgesehen ist.

Der Energiespeicher kann ein Kondensator, beispielsweise ein Superkondensator, sein. Die Sicherstellung einer unidirektionalen Stromflussrichtung ermöglicht die Parallelschaltung eines solchen Energiespeichers, da hiermit ein Stromfluss in die Brennstoffzelle verhindert werden kann. Die Parallelschaltung des Energiespeichers ermöglicht eine hohe Systemdynamik und hohe entnehmbare Leistungsspitzen, die mit einer Brennstoffzelle allein möglicherweise nicht erreichbar wären. Darüber hinaus wird eine Nutzung von Rekuperationsenergie (erhöhte symmetrische Regeldynamik des Antriebs auch bei Drehzahlverringerung) durch den Energiespeicher ebenfalls ermöglicht.

Eine Rekuperation kann bei Luftfahrzeuganwendungen beispielsweise im Sinkflug (Descent) erfolgen, bei dem das sog. Wind-Milling der Fans/Propeller es ermöglicht, die elektrischen Antriebsmaschinen im Generatormodus zu betreiben. Ein weiteres Beispiel ist die Autorotation bei Hubschrauber- oder ähnlichen Fluggeräten, welche auch eine Rekuperation ermöglicht. Zur Aufnahme der elektrischen Rekuperationsenergie kann der elektrische Energiespeicher oder ein weiterer Verbraucher, z.B. eine zusätzliche Batterie, eingesetzt werden.

Durch Variation und Regelung der Betriebspunkte bzw. Betriebsdrücke der Brennstoffzelle kann im Falle eines Akkumulators als Energiespeicher dessen Ladezustand sowie dessen Betriebszustand (Laden/Entladen) gesteuert werden. Diese Steuerungen kann ebenfalls durch eine oder mehrere der mindestens zwei Steuerungseinheiten erfolgen.

Gemäß einer Ausführungsform weist das elektrische Energieversorgungssystem ferner eine Schaltung oder einen Schalter auf, welche/welcher in einer parallelen Verschaltung bezüglich einer Brennstoffzelleneinheit der mindestens zwei Brennstoffzelleneinheiten angeordnet ist, um einen Stromfluss unter Umgehung der Brennstoffzelleneinheit bereitzustellen.

Um Redundanzkonzepte bereitzustellen oder Notfallszenarien zu betrachten, ist es Vorteilhaft, wenn eine Energiequelle möglichst zuverlässig benutzt werden kann. Beispielsweise sind die mindestens zwei Brennstoffzelleneinheiten mit redundanten Zusatzeinheiten, auch als BOPs (Balance Of Plants) bezeichnet, ausgeführt, damit in einem Fehlerfall (z.B. Ausfall einer Pumpe) das System weiterbetrieben werden kann. Hierfür können die Brennstoffzelleneinheiten mit antiparallelen Strompfaden, zum Beispiel in Form von Dioden, versehen werden, um einen Stromfluss auch bei einem Ausfall einer Brennstoffzelleneinheit zu gewährleisten. Dadurch mag sich zwar die Systemspannung verringern, eine Leistungsentnahme ist jedoch weiterhin gewährleistet. Somit kann über die parallele Verschaltung des Schalters bezüglich der ausgefallenen Brennstoffzelleneinheit ein weiterer Betrieb des elektrischen Energieversorgungssystems sichergestellt werden.

Gemäß einem Aspekt der Erfindung ist ein Luftfahrzeug mit einem elektrischen Energieversorgungssystem, wie zuvor und nachfolgend beschrieben, angegeben. Das Luftfahrzeug kann ein Flugzeug, insbesondere ein Transportflugzeug, oder ein anderes Fluggerät, wie beispielswiese eine Drohne oder ein Hubschrauber etc., sein.

### Kurze Beschreibung der Figuren

- Fig. 1: zeigt ein elektrisches Energieversorgungssystem mit Brennstoffzelleneinheiten in symmetrischer Verschaltung bezüglich eines Bezugspotentials, gemäß einem Ausführungsbeispiel.
- Fig. 2: zeigt ein elektrisches Energieversorgungssystem mit Brennstoffzelleneinheiten in symmetrischer Verschaltung bezüglich eines Bezugspotentials, gemäß einem weiteren Ausführungsbeispiel.
- Fig. 3: zeigt ein elektrisches Energieversorgungssystem, bei dem eine elektrische Spannung auf einer negativen Spannungsseite einer Anordnung von Brennstoffzelleneinheiten mit dem Bezugspotential identisch ist, gemäß einem Ausführungsbeispiel.
- Fig. 4: zeigt ein elektrisches Energieversorgungssystem, bei dem sämtliche aktive Teile einer elektrischen Anordnung mit Brennstoffzelleneinheiten vom Bezugspotential entkoppelt sind, gemäß einem Ausführungsbeispiel.
- Fig. 5: zeigt ein Luftfahrzeug mit einem elektrischen Energieversorgungssystem gemäß einem Ausführungsbeispiel.

### Detaillierte Beschreibung beispielhafter Ausführungsformen

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

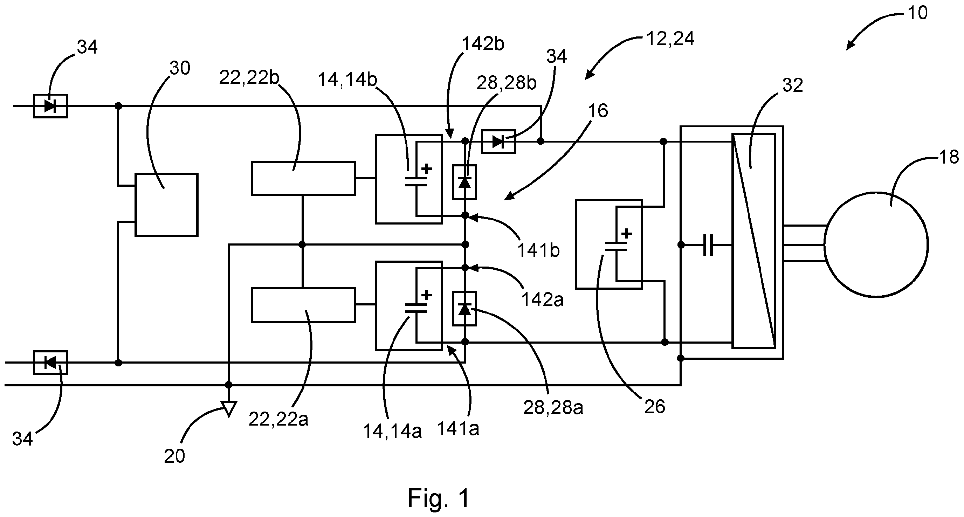

Fig. 1 zeigt elektrisches Energieversorgungssystem 10. Das elektrische Energieversorgungssystem 10 umfasst eine elektrische Anordnung 12 mit zwei Brennstoffzelleneinheiten 14, das heißt eine erste Brennstoffzelleneinheit 14a und eine zweite Brennstoffzelleneinheit 14b, welche in einer elektrisch seriellen Verschaltung 16 zueinander in der elektrischen Anordnung 12 vorgesehen sind und eine elektrische Spannung zur Versorgung eines Verbrauchers 18 bereitstellen. Das elektrische Energieversorgungssystem 10 umfasst auch eine Masseeinheit 20, welcher ein elektrisches Bezugspotential zugeordnet ist, wobei das Bezugspotential beispielsweise ein Null-Potential für die elektrische Anordnung darstellt. Das elektrische Energieversorgungssystem 10 umfasst ferner zwei Steuerungseinheiten 22, das heißt eine erste Steuerungseinheit 22a und eine zweite Steuerungseinheit 22b, die jeweils mindestens einer der beiden Brennstoffzelleneinheiten 14a, 14b zugeordnet sind, wobei jede der beiden Steuerungseinheiten 22a, 22b dazu ausgeführt ist, eine elektrische Spannung der zugeordneten Brennstoffzelleneinheit 14a, 14b bezogen auf das Bezugspotential zu erfassen. Dabei kann die erste Steuerungseinheit 22a der ersten Brennstoffzelleneinheit 14a zugeordnet sein und eine Spannung über diese erste Brennstoffzelleneinheit 14a erfassen bzw. messen. Analog dazu kann die zweite Steuerungseinheit 22b der zweiten Brennstoffzelleneinheit 14b zugeordnet sein und eine Spannung über diese zweite Brennstoffzelleneinheit 14b erfassen bzw. messen. Eine minimale Spannung der ersten Brennstoffzelleneinheit 14a beträgt zum Beispiel -400V und eine maximale Spannung der ersten Brennstoffzelleneinheit 14a beträgt zum Beispiel -250V. Eine minimale Spannung der zweiten Brennstoffzelleneinheit 14b beträgt zum Beispiel +250V und eine maximale Spannung der zweiten Brennstoffzelleneinheit 14b beträgt zum Beispiel +400V. Die beiden Steuerungseinheiten 22a, 22b sind mit dem Bezugspotential der Masseeinheit gekoppelt, so dass eine individuelle Regelung bzw. Steuerung der Spannungen der Brennstoffzelleneinheiten 14a, 14b bezogen auf das Bezugspotential erfolgen kann.

In dem in Fig. 1 gezeigten Beispiel sind die Brennstoffzelleneinheiten 14a, 14b in Bezug auf die Masseeinheit 20 in einer symmetrischen Verschaltung 24 vorgesehen, so dass die erste Steuerungseinheit 22a eine erste Spannungsdifferenz zwischen der ersten Brennstoffzelleneinheit 14a und dem Bezugspotential erfassen kann und die zweite Steuerungseinheit 22b eine zweite Spannungsdifferenz zwischen der zweiten Brennstoffzelleneinheit 14b und dem Bezugspotential erfassen kann. Eine individuelle Regelung der Spannung über die beiden Brennstoffzelleneinheiten 14a, 14b kann dann jeweils durch die beiden zugeordneten Steuerungseinheiten 22a, 22b erfolgen. Die Regelung durch die Steuerungseinheiten 22a, 22b kann derart erfolgen, dass die Spannung über beide Brennstoffzelleneinheiten 14a, 14b im Wesentlichen gleich ist.

In der in Fig. 1 gezeigten symmetrischen Verschaltung 24 liegt das Bezugspotential auf einer positiven Spannungsseite 142a der ersten Brennstoffzelleneinheit 14a und auf einer negativen Spannungsseite 141b der zweiten Brennstoffzelleneinheit 14b. Vorgesehen ist daher eine bipolare Anordnung gegenüber dem Bezugspotential, bei welcher der Anschluss des Leistungsteils der ersten Brennstoffzelleneinheit 14a über den positiven Pol (dargestellt durch ein "+"-Zeichen) der ersten Brennstoffzelleneinheit 14a erfolgt und bei welcher der der Anschluss des Leistungsteils der zweiten Brennstoffzelleneinheit 14b über den negativen Pol der zweiten Brennstoffzelleneinheit 14a erfolgt. Dabei erfolgt eine exakte gemeinsame Betriebsführung der bezogen auf das Bezugspotential positiven und negativen Brennstoffzelleneinheiten 14a, 14b, um unterschiedliche positive und negative Spannungen gegenüber des Bezugspotentials (Masse) zu vermeiden. Die Steuerung und Regelung durch die Steuerungseinheiten 22a, 22b kann hierfür kontinuierlich die Spannung der einzelnen Brennstoffzelleneinheiten 14a, 14b überwachen und deren einzelnen Zellen sowie die Spannung gegenüber dem Bezugspotential (Masse). Eventuelle Fehler - auch bezüglich der Anbindung gegenüber dem Referenzpotential - oder Degradierungen können somit frühzeitig detektiert und geeignete Maßnahmen eingeleitet werden.

Das elektrische Energieversorgungssystem 10 umfasst ferner Leitungsabschnitte, welche die hierin beschriebenen Komponenten der elektrischen Anordnung 12 elektrisch miteinander verbinden und einen Stromkreis bilden, in dem der Verbraucher 18 zur Leistungsabnahme eingesetzt wird. Der Verbraucher 18 ist zum Beispiel ein Elektromotor einer mobilen Plattform. In der in Fig. 1 dargestellten elektrischen Anordnung 12 erfolgt ein elektrischer Stromfluss von der negativen Spannungsseite 141a der ersten Brennstoffzelleneinheit 14a zur positiven Spannungsseite 142a der ersten Brennstoffzelleneinheit 14a und anschließend von der negativen Spannungsseite 141b der zweiten Brennstoffzelleneinheit 14b zur positiven Spannungsseite 142b der zweiten Brennstoffzelleneinheit 14b

Das elektrische Energieversorgungssystem 10 umfasst ferner einen Energiespeicher 26, welcher in einer parallelen Verschaltung bezüglich der mindestens zwei Brennstoffzelleneinheiten 14 in der elektrischen Anordnung 12 vorgesehen ist. Die Parallelschaltung des Energiespeichers 26 ermöglicht eine hohe Systemdynamik und hohe entnehmbare Leistungsspitzen, die über die mit den Brennstoffzelleneinheiten 14a, 14b bereitstellbare Leistung hinausgehen. In dem Energiespeicher 26 kann Rekuperationsenergie vom Verbraucher 18, wenn dieser im Generatormodus betrieben wird, aufgenommen werden, da Rekuperationsenergie durch die Batteriezelleneinheiten 14a, 14b nicht aufgenommen werden kann.

Die Bereitstellung von elektrischer Leistung über die Brennstoffzelleneinheiten 14a, 14b und über den Energiespeicher 26 sowie deren Leistungsverhältnisse können durch die Steuerungseinheiten 22a, 22b eingestellt bzw. geregelt werden. Durch Variation der Betriebspunkte, zum Beispiel Betriebsdrücke, der Brennstoffzelleneinheiten 14a, 14b kann ein Ladezustand des Energiespeichers 26 sowie dessen Betriebszustand (Laden/Entladen) geregelt werden.

Das elektrische Energieversorgungssystem 10 umfasst ferner eine Schaltung 28, welche in einer parallelen Verschaltung bezüglich einer Brennstoffzelleneinheit 14a, 14b der mindestens zwei Brennstoffzelleneinheiten 14 angeordnet ist, um einen Stromfluss unter Umgehung der Brennstoffzelleneinheit 14a, 14b bereitzustellen. Insbesondere ist eine erste Schaltung 28a, beispielsweise eine Diode, parallel zur ersten Brennstoffzelleneinheit 14a geschaltet und eine zweite Verschaltung 28b, beispielsweise eine weitere Diode, ist parallel zur zweiten Brennstoffzelleneinheit 14b geschaltet. Durch diese Parallelschaltungen wird bei Ausfall einer oder mehrerer der Brennstoffzelleneinheiten 14a, 14b der Betrieb des gesamten elektrischen Energieversorgungssystems 10 nicht beeinträchtigt, da der Stromfluss weiterhin gewährleistet wird.

Die elektrische Anordnung 12 kann ferner einen Inverter 32 umfassen, der eine durch die Brennstoffzelleneinheiten 14a, 14b bereitgestellte Gleichspannung in eine Wechselspannung umwandelt, die dann dem Verbraucher 18 bereitgestellt wird. Weitere Schaltungen 34 oder Zusatzeinheiten 30 können in der elektrischen Anordnung 12 vorgesehen sein, wie in Fig. 1 dargestellt.

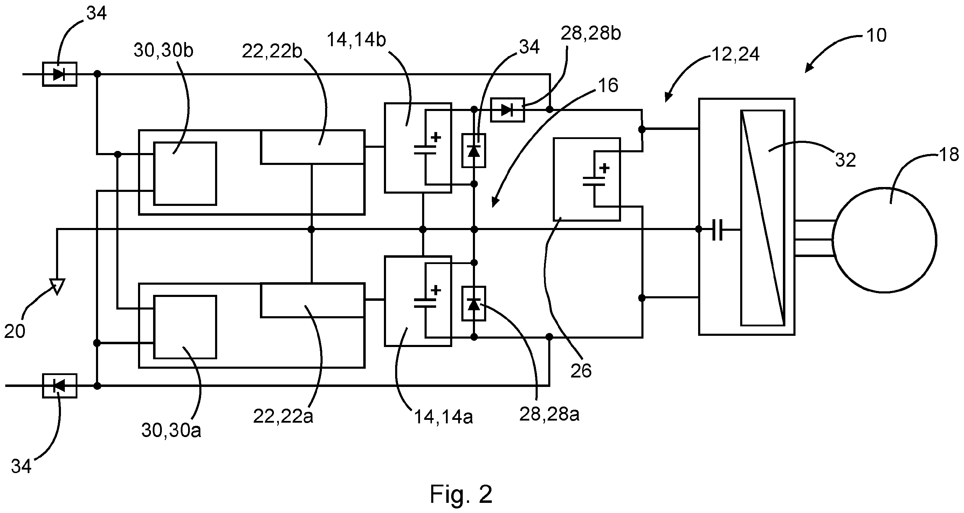

Fig. 2 zeigt ein elektrisches Energieversorgungssystem 10 mit Brennstoffzelleneinheiten 14 in symmetrischer Verschaltung 16 bezüglich eines Bezugspotentials. Dabei sind grundsätzlich sämtliche Verschaltungen und Eigenschaften der in Fig. 2 gezeigten elektrischen Anordnung 12 mit den Verschaltungen und Eigenschaften der in Fig. 2 gezeigten elektrischen Anordnung identisch, so dass das zu Fig. 1 beschriebene entsprechend gilt. In der in Fig. 2 gezeigten elektrischen Anordnung 12 ist jedoch ferner ein Redundanzkonzept gezeigt, bei der ferner zwei redundante Zusatzeinheiten 30a, 30b bzw. sog. BoP (Balance of Plant) -Komponenten enthalten sind, welche wie die Brennstoffzelleneinheiten 14a, 14b auch auf das Bezugspotential bezogen werden, so dass der Aufwand für eine Potentialtrennung solcher Komponenten vermieden werden kann. Hierbei werden sämtliche Gehäuse der elektrischen Anordnung 12 auf das Bezugspotential bezogen. Das Bezugspotential liegt dabei in der gezeigten symmetrischen Verschaltung 24 weiterhin auf der positiven Spannungsseite (dargestellt durch ein "+"-Zeichen) der ersten Brennstoffzelleneinheit 14a und auf der negativen Spannungsseite der zweiten Brennstoffzelleneinheit 14b. Eine minimale Spannung der ersten Brennstoffzelleneinheit 14a beträgt zum Beispiel -400V und eine maximale Spannung der ersten Brennstoffzelleneinheit 14a beträgt zum Beispiel -250V. Eine minimale Spannung der zweiten Brennstoffzelleneinheit 14b beträgt zum Beispiel +250V und eine maximale Spannung der zweiten Brennstoffzelleneinheit 14b beträgt zum Beispiel +400V. Ein die erste Steuerungseinheit 22a umfassendes Gehäuse kann die erste Zusatzeinheit 30a umfassen und ein die zweite Steuerungseinheit 22b umfassendes Gehäuse kann die zweite Zusatzeinheit 30b umfassen, wodurch u.a. Potentialtrennungen zwischen den Komponenten vermieden werden.

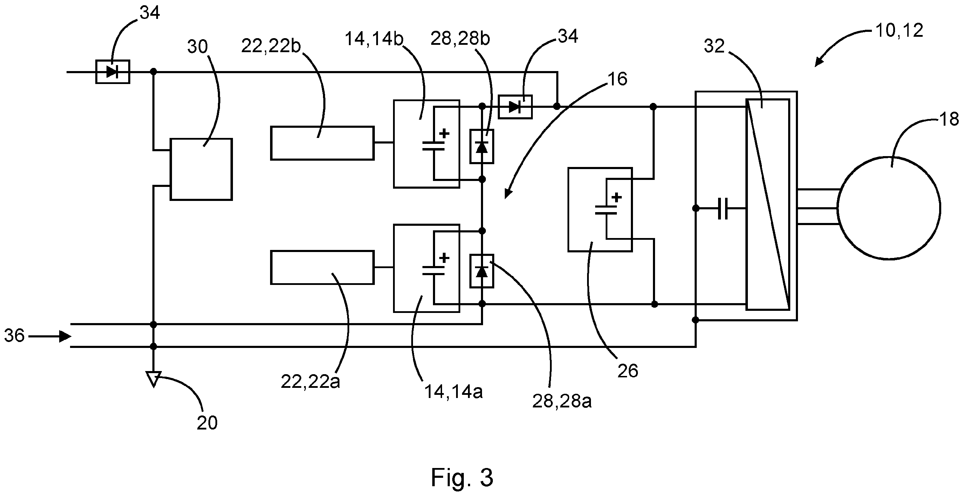

Fig. 3 zeigt ein elektrisches Energieversorgungssystem 10, bei dem eine elektrische Spannung auf einer negativen Spannungsseite 36 einer Anordnung von Brennstoffzelleneinheiten 14 mit dem Bezugspotential identisch ist. Eine minimale Spannung der ersten Brennstoffzelleneinheit 14a beträgt zum Beispiel +250V und eine maximale Spannung der ersten Brennstoffzelleneinheit 14a beträgt zum Beispiel +400V. Eine minimale Spannung der zweiten Brennstoffzelleneinheit 14b beträgt zum Beispiel +250V und eine maximale Spannung der zweiten Brennstoffzelleneinheit 14b beträgt zum Beispiel +400V. Es sind die beiden Brennstoffzelleneinheiten 14a, 14b weiterhin in Serie geschaltet und den beiden Brennstoffzelleneinheiten 14a, 14b ist weiterhin jeweils eine Steuerungseinheit 22a, 22b zur Regelung zugeordnet, wie oben beschrieben, allerdings ist das Bezugspotential nun im Gegensatz zu den in den Figuren 1 und 2 gezeigten Konfigurationen auf der negativen Spannungsseite 36 sämtlicher Batteriezelleneinheiten 14 vorgesehen. Die Masseeinheit 20 ist daher mit dem negativen Pol der ersten Batteriezelleneinheit 14a gekoppelt. Das Bezugspotential für die aktiven Teile und Gehäuse der elektrischen Anordnung ist die Masse. Bei dieser Verschaltungsart im TN/TT-Netz ist die negative Rückleitung vom Verbraucher 18 zu der ersten Brennstoffzelle 14a mit der Masse identisch bzw. an die Masseeinheit 20 gekoppelt. In der in Fig. 3 gezeigten Konfiguration können höhere Spannungen gegenüber dem Bezugspotential auftreten als in den in den Figuren 1 und 2 gezeigten Konfigurationen, was ggf. größere Isolationsstrecken erforderlich macht.

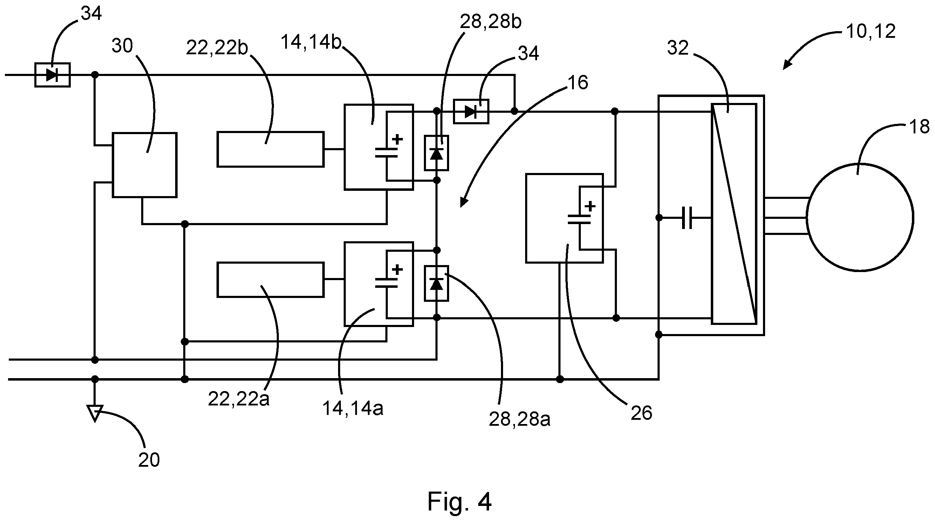

Fig. 4 zeigt ein elektrisches Energieversorgungssystem 10, bei dem sämtliche aktive Teile der elektrischen Anordnung 12 vom Bezugspotential entkoppelt sind. Es sind die beiden Brennstoffzelleneinheiten 14a, 14b weiterhin in Serie geschaltet und den beiden Brennstoffzelleneinheiten 14a, 14b ist weiterhin jeweils eine Steuerungseinheit 22a, 22b zur Regelung zugeordnet, wie oben beschrieben, allerdings sind sämtliche aktive Komponenten der elektrischen Anordnung 12 vom Bezugspotential entkoppelt. Lediglich die Gehäuse der einzelnen Komponenten sind auf das Bezugspotential bezogen. Eine minimale Spannung der ersten Brennstoffzelleneinheit 14a beträgt hier zum Beispiel +250V und eine maximale Spannung der ersten Brennstoffzelleneinheit 14a beträgt zum Beispiel +400V. Eine minimale Spannung der zweiten Brennstoffzelleneinheit 14b beträgt zum Beispiel +250V und eine maximale Spannung der zweiten Brennstoffzelleneinheit 14b beträgt zum Beispiel +400V. Eine solche Verschaltung in Form eines IT-Netzes mit Gleichspannung hat Vorteile da eine gegebenenfalls auftretende Asymmetrie noch nicht zum Ausfall des Systems führt. Um die Symmetrie der Spannungen der Brennstoffzelleinheiten 14a, 14b gegenüber dem Bezugspotential sicherzustellen und damit die Belastungen für die Isolationsstrecken möglichst gering zu halten, werden die Spannungen der Brennstoffzelleinheiten 14a, 14b kontinuierlich überwacht und ggf. eine Regelung der über die einzelnen Brennstoffzelleinheiten 14a, 14b jeweils auftretenden Spannung vorgenommen.

Die vorliegende Erfindung stellt ein elektrisches Energieversorgungssystem 10 mit einer seriellen Verschaltung 16 zweier oder mehrerer Brennstoffzellen-Stacks 14a, 14b zur Spannungserhöhung für den Antrieb bei elektrisch angetriebenen Vorrichtungen bereit. Dabei können insbesondere Spannungen von über 800V bereitgestellt werden, wobei auf zusätzliche Leistungselektroniken wie DC/DC-Wandler verzichtet werden kann, was u.a. zu einer höheren Zuverlässigkeit des Gesamtsystems führt. Auch um das Systemgewicht bei gegebenem Leistungsbedarf möglichst gering zu halten, ist es vorteilhaft, auf eine Leistungselektronik, wie sie beispielsweise in parallelen Verschaltungen zur Erhöhung der Systemspannung vorgesehen ist, zu verzichten und einen möglichst direkten Leistungsfluss bereitzustellen. Insbesondere bei hohem Leistungsbedarf ist eine höhere Spannung vorteilhaft, um die Ströme möglichst gering zu halten. Eine möglicherweise große Einsatzhöhe der mobilen Plattform, beispielsweise bei Luftfahrzeugen, in der das erfindungsgemäße Energieversorgungssystem 10 eingesetzt werden kann, erschwert jedoch eine große Erhöhung der Systemspannung, da hier die Isolationsstrecken solchen Höheneinflüssen unterworfen sind. Der Betrieb bei geringem Luftdruck aufgrund der hohen Einsatzhöhe erfordert die Berücksichtigung des Paschen-Gesetzes (luftdruckabhängige Durchbruchspannung). Besonders vorteilhaft ist hier die in den Figuren 1 und 2 gezeigte Konfiguration des elektrischen Energieversorgungssystems 10, da dort die maximal auftretende Spannung mit Bezug auf das Bezugspotential (Masse) aufgrund der beschriebenen bipolaren Anordnung gegenüber den weiteren in den Figuren 3 und 4 gezeigten Konfigurationen minimiert ist. Die Gehäuse der verwendeten Komponenten werden üblicherweise auf das Bezugspotential bezogen, vergleichbar mit einer Schutzerdung, so dass höhere Spannungen gegenüber dem Bezugspotential auch größere Isolationsstrecken erfordern, was insbesondere in den in den Figuren 3 und 4 gezeigten Konfigurationen der Fall sein kann.

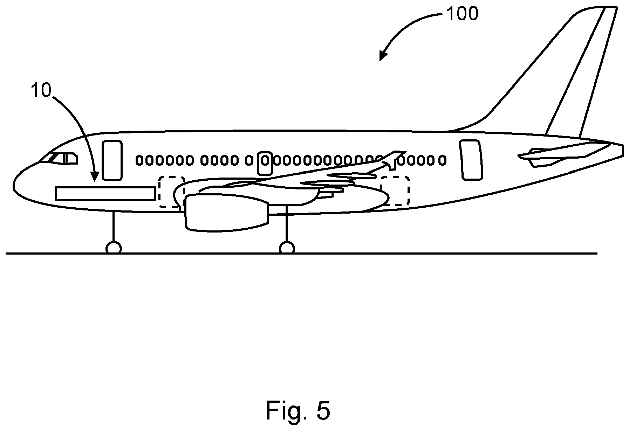

Fig. 5 zeigt eine mobile Plattform 100 in Form eines Luftfahrzeugs 100, das ein elektrisches Energieversorgungssystem 10, wie zuvor beschrieben, umfasst.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektrisches Energieversorgungssystem (10) für mobile Plattformen (100), aufweisend:
eine elektrische Anordnung (12) mit mindestens zwei Brennstoffzelleneinheiten (14), welche in einer seriellen Verschaltung (16) zueinander in der elektrischen Anordnung (12) vorgesehen sind und dazu ausgeführt sind, eine elektrische Spannung zur Versorgung mindestens eines Verbrauchers (18) bereitzustellen;
eine Masseeinheit (20), welcher ein elektrisches Bezugspotential zugeordnet ist; und
mindestens zwei Steuerungseinheiten (22), die jeweils mindestens einer der Brennstoffzelleneinheiten (14) zugeordnet sind, wobei jede der mindestens zwei Steuerungseinheiten (22) dazu ausgeführt ist, eine elektrische Spannung der zugeordneten Brennstoffzelleneinheit (14) bezogen auf das Bezugspotential zu erfassen.

2. Elektrisches Energieversorgungssystem (10) nach Anspruch 1,
wobei das elektrische Energieversorgungssystem (10) neben den Brennstoffzelleneinheiten (14) keine Leistungselektronik zur Erhöhung einer durch die Brennstoffzelleneinheiten (14) bereitgestellten elektrischen Spannung umfasst.

3. Elektrisches Energieversorgungssystem (10) nach einem der vorhergehenden Ansprüche,
wobei die mindestens zwei Steuerungseinheiten (22) jeweils dazu ausgeführt sind, die elektrische Spannung der zugeordneten Brennstoffzelleneinheiten (14) bezogen auf das Bezugspotential zu regulieren, so dass die jeweils durch die Brennstoffzelleneinheiten (14) bereitgestellten elektrischen Leistungen im Wesentlichen gleich sind.

4. Elektrisches Energieversorgungssystem (10) nach einem der vorhergehenden Ansprüche,
wobei die Brennstoffzelleneinheiten (14) in Bezug auf die Masseeinheit (20) in einer symmetrischen Verschaltung (24) vorgesehen sind, so dass eine erste Spannungsdifferenz zwischen einer ersten Brennstoffzelleneinheit (14a) der mindestens zwei Brennstoffzelleneinheiten (14) und dem Bezugspotential im Wesentlichen gleich einer zweiten Spannungsdifferenz zwischen einer zweiten Brennstoffzelleneinheit (14b) der mindestens zwei Brennstoffzelleneinheiten (14) und dem Bezugspotential ist.

5. Elektrisches Energieversorgungssystem (10) nach Anspruch 4,
wobei in der symmetrischen Verschaltung (24) das Bezugspotential auf einer positiven Spannungsseite (142a) der ersten Brennstoffzelleneinheit (14a) liegt und auf einer negativen Spannungsseite (141b) der zweiten Brennstoffzelleneinheit (14b) liegt.

6. Elektrisches Energieversorgungssystem (10) nach einem der Ansprüche 1 bis 3,
wobei eine elektrische Spannung auf einer negativen Spannungsseite der elektrischen Anordnung (12) mit dem Bezugspotential identisch ist.

7. Elektrisches Energieversorgungssystem (10) nach einem der Ansprüche 1 bis 3,
wobei sämtliche aktive Teile der elektrischen Anordnung (12) vom Bezugspotential entkoppelt sind.

8. Elektrisches Energieversorgungssystem (10) nach einem der vorhergehenden Ansprüche, ferner aufweisend:
einen Energiespeicher (26), welcher in einer parallelen Verschaltung bezüglich der mindestens zwei Brennstoffzelleneinheiten (14) vorgesehen ist.

9. Elektrisches Energieversorgungssystem (10) nach einem der vorhergehenden Ansprüche, ferner aufweisend:
eine Schaltung (28), welche in einer parallelen Verschaltung bezüglich einer Brennstoffzelleneinheit (14a, 14b) der mindestens zwei Brennstoffzelleneinheiten (14) angeordnet ist, um einen Stromfluss unter Umgehung der Brennstoffzelleneinheit (14a, 14b) bereitzustellen.

10. Luftfahrzeug (100) mit einem elektrischen Energieversorgungssystem (10) nach einem der vorhergehenden Ansprüche.
